Europäisches Patentamt

European Patent Office

Office européen des brevets

(19)

(11) Veröffentlichungsnummer : **0 082 275**
**B1**

(12) ## EUROPÄISCHE PATENTSCHRIFT

(45) Veröffentlichungstag der Patentschrift :
**18.09.85**

(21) Anmeldenummer : **82109977.7**

(22) Anmeldetag : **28.10.82**

(51) Int. Cl.⁴ : **G 01 F   1/66**

(54) **Messwertgeber zur Bestimmung der Durchflussmenge einer strömenden Flüssigkeit.**

(30) Priorität : **14.12.81 CH 7952/81**

(43) Veröffentlichungstag der Anmeldung :
**29.06.83 Patentblatt 83/26**

(45) Bekanntmachung des Hinweises auf die Patenterteilung : **18.09.85 Patentblatt 85/38**

(84) Benannte Vertragsstaaten :
**AT DE FR GB IT NL SE**

(56) Entgegenhaltungen :
**GB-A-   776 526**
**US-A- 2 993 373**
**US-A- 3 109 112**

(73) Patentinhaber : **LGZ LANDIS & GYR ZUG AG**

**CH-6301 Zug (CH)**

(72) Erfinder : **Lechner, Hubert**
**Industriestrasse 6**
**CH-6300 Zug (CH)**
Erfinder : **Steinle, Benedikt**
**Schönbühl 10**
**CH-6300 Zug (CH)**

(74) Vertreter : **Müller, Hans-Jürgen et al**
**Müller, Schupfner & Gauger Karlstrasse 5**
**D-2110 Buchholz/Nordheide (DE)**

EP 0 082 275 B1

## Beschreibung

Die Erfindung bezieht sich auf einen Messwertgeber für eine Einrichtung zur Bestimmung der Menge einer durch ein Rohrsystem strömenden Flüssigkeit nach dem Oberbegriff des Patentanspruchs 1.

Zur Bestimmung der Durchflussmenge einer Flüssigkeit durch ein Rohrsystem ist es aus der DE-B-29 24 561 bekannt, Ultraschallwellenzüge von zwei Seiten gleichzeitig stromabwärts und stromaufwärts durch die im Messrohr strömende Flüssigkeit zu senden und zu empfangen, um aus der Laufzeitdifferenz auf die mittlere Strömungsgeschwindigkeit und damit auch die Durchflussmenge schliessen zu können.

Das Messverfahren ist unabhängig vom Strömungsprofil der strömenden Flüssigkeit, wenn das Messrohr als Wellenleiter verwendet wird und von den Schallwandlern ausschliesslich die ebene Grundwelle im Messrohr angeregt wird.

Ein einzelner Wellentyp kann nur von einer Schallquelle angeregt werden, die eine dem Wellentyp entsprechende Potentialverteilung erzeugt. Eine solche Schallquelle stellt der Kolbenschwinger dar, welcher aber im Frequenzbereich des Ultraschalls allerdings schwer zu verwirklichen ist.

Normalerweise erzeugt eine Schallquelle eine Mischwelle, d. h. eine Kombination verschiedener räumlicher Wellentypen, von denen jede Welle eine eigene, strömungsabhängige Phasengeschwindigkeit aufweist. Die Oberwellen einer solchen Mischwelle können vor allem im Bereiche laminarer Strömungen erhebliche Messfehler verursachen.

Es wurde bereits vorgeschlagen, die Strömungsprofile der strömenden Flüssigkeit so zu beeinflussen, dass der Messfehler vernachlässigbar wird. Zu diesem Zwecke sind die Enden des Messrohres mit Oeffnungen oder Schlitzen oder aussenseitig mit Zapfen versehen. Die Beeinflussung der Strömungsprofile kann auch mit Hilfe eines durch eine Speiche oder durch eine Trennwand gebildeten Steges im Messrohr erfolgen.

Der vorliegenden Erfindung liegt die Aufgabe zugrunde, den Einfluss der Oberwellen auf die Messgenauigkeit zurückzudämmen oder auszuschalten, ohne die Druckverluste und die Störanfälligkeit grundsätzlich zu erhöhen.

Die gestellte Aufgabe ist durch Merkmale des ersten Anspruchs gelöst.

Ein Ausführungsbeispiel des erfindungsgemässen Messwertgebers wird anhand der Zeichnung näher erläutert, deren einzige Figur einen schematischen Aufbau des Messwertgebers zeigt.

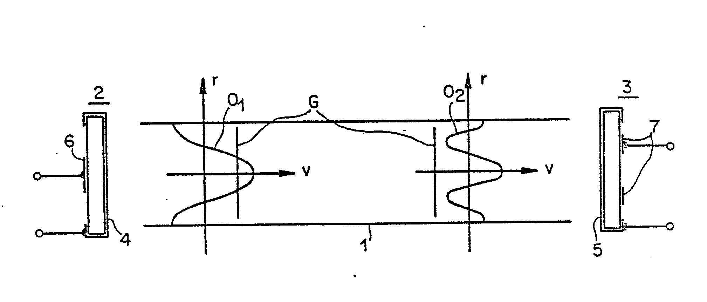

Der Messwertgeber gemäss der Figur 1 weist ein Messrohr 1 mit stirnseitig vorgelagerten Ultraschallwandlern 2, 3 auf. Das Strömungsmittel wird stirnseitig oder seitlich zu- und abgeführt. Der Messbereich umfasst laminare und turbulente Strömungen. Die Ultraschallwandler 2, 3 sind piezo-elektrische Scheibenschwinger mit je einer Vollelektrode 4 bzw. 5 und mit je einer Teilelektrode 6 bzw. 7. Die Teilelektrode 6 des ersten Ultraschallwandlers 2 ist eine scheibenförmige Elektrode, während die Teilelektrode 7 des zweiten Ultraschallwandlers 3 eine ringförmige Elektrode ist. Mit r ist die Durchmesserkoordinate des Messrohres 1 und mit v die Teilchengeschwindigkeit der strömenden Flüssigkeit bezeichnet.

Der Ultraschallwandler 2 mit der scheibenförmigen Teilelektrode 6 regt im Messrohr 1 neben einer ebenen Grundwelle G im wesentlichen die erste Oberwelle $O_1$ an, wahrend der Ultraschallwandler 3 mit der ringförmigen Teilelektrode 7 neben der Grundwelle G im wesentlichen die zweite Oberwelle $O_2$ anregt. Nach dem Reziprozitätstheorem der Nachrichtentechnik hat ein Wandler im Sende- wie im Empfangsbetrieb die gleichen Eigenschaften. Beide Ultraschallwander 2, 3 entnehmen daher dem ankommenden Wellengemisch im wesentlichen nur die Grundwelle G. Die beiden Oberwellen $O_1$ und $O_2$ werden reflektiert, was zur Folge hat, dass der Einfluss der Oberwellen zurückgedämmt oder sogar ausgeschaltet wird, ohne dass die Druckverluste im Messrohr 1 und die Störanfälligkeit des Messwertgebers erhöht werden. Die Zusammensetzung der von den beiden Ultraschallwandlern 2, 3 erzeugten Oberwellenspektren kann beliebig sein. Die beiden Oberwellenspektren müssen nur annähernd disjunktiv sein, das heisst, sie dürfen keine gemeinsamen Oberwellen aufweisen. Nur in diesem Falle empfangen die Ultraschallwandler 2, 3 im wesentlichen die Grundwelle G.

Die oben erwähnten Bedingungen können auch durch Ultraschallwandler mit einer anderen geeigneten Anordnung von Elektroden oder mit anderen Ultraschallwandlern erfüllt werden.

## Patentansprüche

1. Meßwertgeber für eine Einrichtung zur Bestimmung der Menge einer durch ein Rohrsystem fließenden Flüssigkeit anhand der Laufzeitdifferenz von Ultraschallimpulsen in und gegen die Strömungsrichtung, mit zwei an entgegengesetzten Enden eines Meßrohrabschnitts (1) des Rohrsystems positionierbaren, jeweils als Sender und als Empfänger betreibbaren Ultraschallwandlern (2, 3), welche im Sendebetrieb im Meßrohrabschnitt (1) Schwingungstypen anregen, die jeweils eine Grundwelle (G) mit einem über den Querschnitt des Meßrohrabschnitts (1) im wesentlichen ebenen Profil sowie Oberwellen ($O_1$, $O_2$) zu diesen Grundwellen (G) enthalten, dadurch gekennzeichnet, daß die Ultraschallwandler (2, 3) so ausgebildet sind, daß die jeweils von ihnen erzeugten Oberwellen ($O_1$, $O_2$) keine gemeinsamen Ordnungen haben.

2. Meßwertgeber nach Anspruch 1, dadurch gekennzeichnet, daß der eine Ultraschallwandler (2) im wesentlichen die erste Oberwelle (O₁) und der zweite Ultraschallwandler (3) die zweite Oberwelle (O₂) im Meßrohrabschnitt (1) anregt.

3. Meßwertgeber nach Anspruch 1 oder 2, dadurch gekennzeichnet, daß als Ultraschallwandler (2, 3) piezoelektrische Scheibenschwinger vorgesehen sind und daß der eine Ultraschallwandler (2) mit einer scheibenförmigen Teilelektrode (6) und der andere Ultraschallwandler (3) mit einer ringförmigen Teilelektrode (7) versehen ist.

**Claims**

1. A sensor for a device for determining the amount of a fluid flowing through a pipe system, by means of the transit time difference of ultrasonic pulses in and against the direction of flow, comprising two ultrasonic transducers (2, 3) which can be positioned at opposite ends of a measuring pipe portion (1) of the pipe system and which can be respectively operated as a transmitter and as a receiver and which in the transmitting mode induce in the measuring pipe portion (1) oscillation types which respectively contain a fundamental wave (G) with a profile which is substantially flat over the cross-section of the measuring pipe portion (1), and harmonics (O₁, O₂) with respect to said fundamental waves (G), characterised in that the ultrasonic transducers (2, 3) are of such a design that the harmonics (O₁, O₂) respectively produced thereby do not have any common orders.

2. A sensor according to claim 1 characterised in that the one ultrasonic transducer (2) substantially induces the first harmonic (O₁) in the measuring pipe portion (1) and the second ultrasonic transducer (3) substantially induces the second harmonic (O₂) in the measuring pipe portion (1).

3. A sensor according to claim 1 or claim 2 characterised in that piezoelectric disc-type oscillators are provided as the ultrasonic transducers (2, 3) and that the one ultrasonic transducer (2) is provided with a disc-shaped electrode component (6) and the other ultrasonic transducer (3) is provided with an annular electrode component (7).

**Revendications**

1. Capteur de mesure pour un dispositif visant à la détermination de la quantité d'un fluide en circulation parcourant un système de tuyauteries à l'aide de la différence de temps de propagation d'impulsions ultrasoniques dans le sens du courant et à contre-courant avec deux transformateurs ultrasoniques 2, 3 utilisables comme émetteur et récepteur positionnables aux extrémités opposées d'un tronçon de tube de mesure 1 du système de tuyauterie, excitant, en service d'émission, dans le tronçon de tube de mesure 1 des types de vibrations présentant chacune une onde fondamentale G à profil sensiblement plan sur la section du tronçon de tube de mesure 1 ainsi que des ondes harmoniques O₁, O₂ de cette onde fondamentale G caractérisé en ce que les transformateurs ultrasoniques 2, 3 sont conçus de telle sorte les ondes harmoniques O₁, O₂ qu'ils produisent n'ont pas d'ordre commun.

2. Capteur de mesure selon la revendication 1 caractérisé en ce que l'un des transformateurs ultrasoniques 2 excite essentiellement la première onde harmonique O₁ et le second 3 excite en prépondérance la seconde onde harmonique O₂ dans le tronçon du tube de mesure.

3. Capteur de mesure selon les revendications 1 ou 2 caractérisé en ce que sont prévus, comme transformateurs ultrasoniques 2, 3 des oscillateurs piézoélectriques à disques, l'un d'entre eux, 2, présentant une électrode partielle 6 en forme de disque et l'autre, 3 une électrode partielle 7 de forme annulaire.